# EUROPEAN PATENT APPLICATION

(11) **EP 3 300 600 A1**
(43) Date of publication of application: **04.04.2018**
(21) Application number: 17191930.1
(22) Date of filing: 19.09.2017
(51) Int. Cl.: A01M 23/24, A01M 23/28

(54) **ETHICAL MOUSETRAP**

(30) Priority: 28.09.2016 IT 201600097486
(71) Applicant: Italsia Millennium S.N.C., 35010 Camposampiero (PD) (IT)
(72) Inventor: BASSI, Aldo, 35010 Camposampiero PD (IT)

(57) **Abstract**

Summary

The mousetrap that is the object of this invention is a mousetrap that stands out because it is completely ethical in both the way it captures the mouse and how it fulfils its function with a safe and effective operation.

## Description

This invention concerns an ethical mousetrap, in the sense of the common acceptance of the general opinion of how to catch mice.

### Prior art

With the progress of the degree of development and humanising of a community, also the degree of awareness, namely respect for life and recognition of its dignity, is progressively increasing not only directly with regard to the members of the community itself but above all also with regards to all the animals that inhabit that community.

First of all, it is evident that this sensitivity concerns pets, but increasingly it also concerns animals that populate and live in that community, whether they are appreciated, despised or even feared.

Mice and rats have always been among the animals to defend against and move away from the habitable environment, without any concern about the tools or methods employed to achieve that purpose.

For this reason, in the recent past there were instruments, and they are still used today, that began to offend this common sensitivity.

These methods and tools include all the glues, such as tapes or boards, and all those poisons that act on the nervous system.

In fact, the aforementioned methods can kill mice or rats in general in a cruel manner, causing a long agonising death and with considerable stress for these animals.

There are also other methods that, although they should provide a quick end, very often fail to function effectively, and achieve this end of killing the animal by starving it, and also in this case some considerable time after the first intervention.

Finally, there is a further problem related to all mousetraps: namely that after they have been triggered, and have killed the animal, whether quickly or otherwise, in a non-cruel way or not, namely ethically or otherwise, this process degenerates into a decomposition of the body of the dead animal.

In reality a remedy has already been found to this problem with the use of anticoagulant rat poisons, where the cause death is an internal haemorrhage.

There are many other rat poisons that are based on other effects, but because of their toxicity for other unrelated animals they are not used so often.

A good point of these poisons is their delayed effect. It is well known that in the dynamics of herd protection, the older animals, in order to protect the herd, are the first to expose themselves to a potential threat (which can also be bait) and only if they feel that there is no danger does the herd consume the bait, whereas if in the immediacy of the consumption of the bait any danger is perceived, such as a detrimental effect on the older animal, the entire herd interprets the presence of the bait as a threat, which will now remain at a safe distance, since it is a proven threat to the existence of the whole herd.

Another advantage of these poisons is that a powerful dehydration is the initial consequence following ingestion, which forces the animal to get out of its lair in search of water, thereby avoiding the problem that the bodies remain, albeit dehydrated, within secret dens.

There remains the problem of the potential toxicity of the rat poisons, so they are banned in the food industry and in all establishments that treat or deal with foods of any kind.

In addition, in order to avoid the indiscriminate use of rat poisons, there is a growing move towards regulations that limit their use.

For all of these reasons, "mechanical" traps are still at the forefront with the aforementioned ethical reservations.

It should be said that these mechanical traps, like bear traps, were certainly much more reliable and had a secure outcome when they were fitted with a gripping arm ending with a sharp metallic toothed mouth.

The mouth with sharp teeth, very often metallic, inflicted a violent blow on a small mouse that was very often immediately deadly or else left such a serious trauma that the animal died within a short time.

Recently, these traps have been modified, to make them safe for their operators, both regarding the materials as well as the shapes of the gripping mouth, while safeguarding against inadvertent manoeuvring of the hands of the operators.

These modifications, even if they have the advantage of safeguarding the operator's hands, are less reliable in providing the immediate death of the trapped mouse, being able only to hold it and/or knock it out after causing traumas resulting in a long and agonising death.

For this reason, also the mechanical traps currently in use cannot be defined as ethical devices for capturing and killing mice.

### Objects of the invention

A primary object of the invention is to make available a new mousetrap that overcomes the drawbacks of the prior art.

A fundamental object of this invention is to make available a new mousetrap that overcomes the ethical reservations described above. Another object of this invention is to make available a new mousetrap that provides the safe, fast and reliable capture and killing of a normal mouse.

A different purpose of this invention is to make available a new mousetrap that eliminates any possibility of the contamination of the environment in which the trap is located.

An important object of this invention is to make available a new mousetrap that can be modular.

Another object of this invention is to make available a new mousetrap that can be easily monitored in its operation, even from a distance.

A further object of this invention is to make available a new mousetrap that is cost-effective.

Another object of this invention is to make available a new mousetrap that can be easily replaced and substituted because it is easy for the operator to handle.

### Explanation of the invention

The ethical mousetrap that is the object of the invention, comprising a shelf above an underlying basin filled with liquid, having at least one mechanical mousetrap fitted with a triggering mechanism positioned on said shelf, is capable of mechanically activating with the approach and/or interaction of a normal mouse, retaining it following the activation of the triggering device, where there are position-maintenance devices that keep said mechanical trap in position joined to the top of the mousetrap, and which are operated with the activation of the triggering device, detaching said mechanical trap from its position on the shelf of said trap, and making it plunge, trap and mouse together, into said liquid solution contained in the basin beneath.

Thus, essentially said mousetrap consists of a trap mechanism for mice capable of mechanically activating with the approach of the mouse, retaining it after an interaction with a triggering device, where said mechanical trap is located above a basin containing a liquid solution, and after activation with the capture and retention of the mouse, disengaging itself from its position above said basin, due to the action of devices for maintaining the position, it falls, trap and mouse together, into said liquid solution.

### Advantageous characteristics of the invention

Advantageously said devices for maintaining the position above said basin intervene immediately after and as a result of the detention of the mouse in the trap itself.

Advantageously said intervention of the trap moves the position-maintenance devices disengaging them from their respective seats, eliminating the stable balance from said mechanical trap.

Advantageously, said intervention of the trap acts by shifting the whole trap and disengaging the devices for maintaining the position, disengaging them from their respective seats.

Advantageously, after the intervention of the triggering device, the rearming wing of the trap acts together with the trap structure to push the mechanical trap forcefully into the basin underneath.

Advantageously, said trap has additional mass for the safe sinking of the trap, together with the entrapped mouse, in said liquid solution, toward the bottom of the basin filled with liquid.

Advantageously, said trap has one or more ramps on the side of the basin to allow the mouse to easily reach one or more mechanical traps above the basin itself.

Advantageously, said liquid solution is a solution that prevents putrefaction and/or the release of the bad smells of the dead mouse.

Advantageously, said trap is modular, where the mechanical traps can be arranged adjacent to one another above the basin, while being able to operate individually.

Advantageously, said trap is monitored in its activation even remotely, thereby facilitating maintenance and eventual support.

Advantageously, said trap clearly shows the operators the activation of each single mechanical trap, as the trap has a transparent top protection.

Advantageously, lastly, the activation of each single mechanical trap can be checked at a distance, since they are provided with data communication devices with a control station activated by the interruption of the circuit continuity, kept closed by the presence of the mechanical traps in position on the raised surface.

These advantages and other objects are all attained by the ethical mousetrap, according to the attached claims.

### Brief description of the drawings

The technical characteristics of the invention, according to the aforesaid aims, can clearly be seen in the content of the claims below, and its advantages will become more readily apparent in the detailed description that follows, made with reference to the accompanying drawings, which illustrate a preferred embodiment, which is purely exemplary and not limiting, in which:

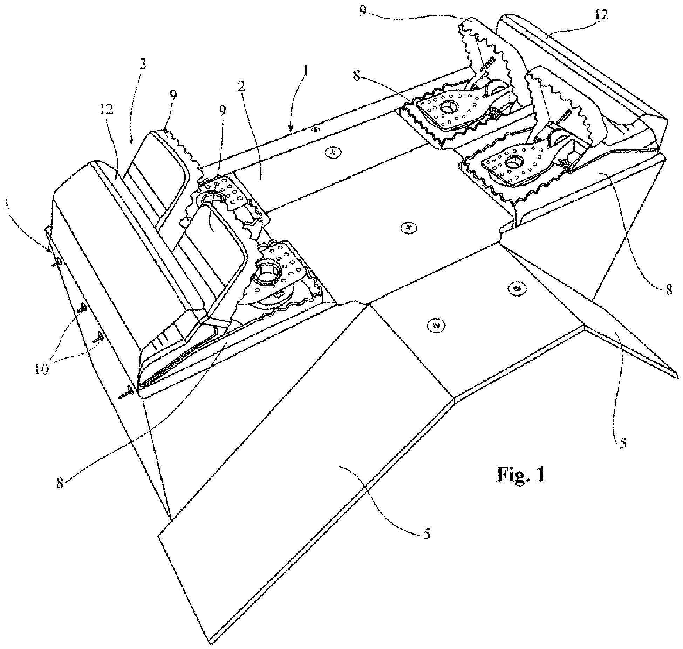

Fig. 1 shows a perspective view of an ethical trap;

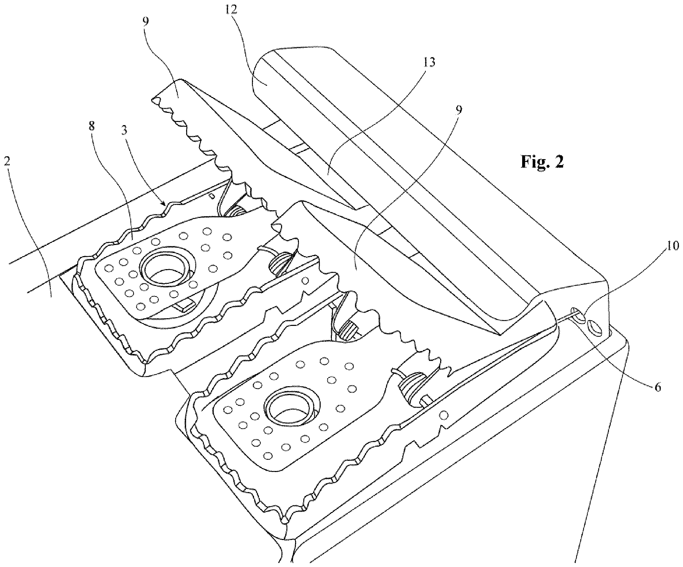

Fig. 2 shows an enlarged detail of fig. 1, highlighting the positioning of mechanical traps joined to the raised shelf.

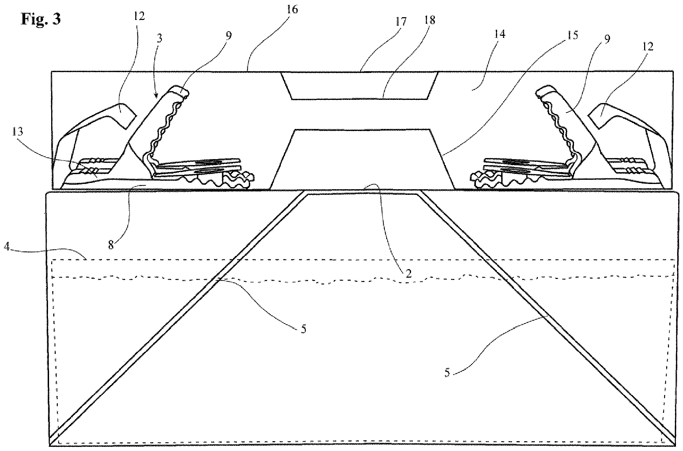

Fig. 3 shows a side plan view of the trap shown in fig. 1.

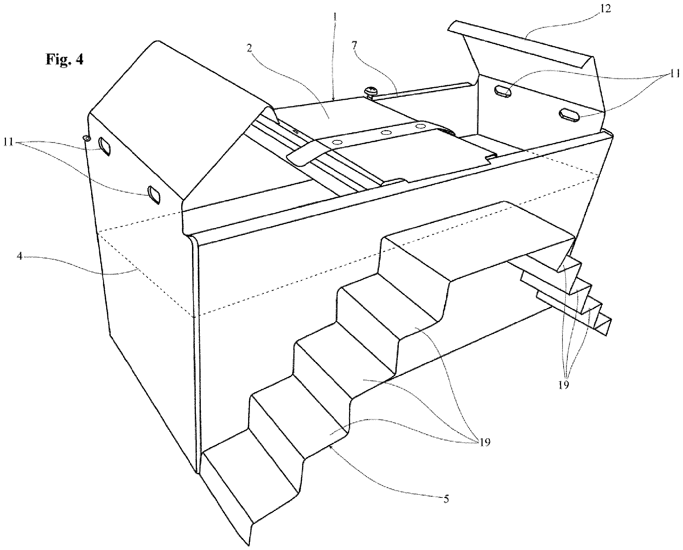

Fig. 4 shows a perspective view of the trap of fig. 1 modified with ascending devices configured as steps and without the mechanical traps to better highlight their position on the raised support and make the basin below visible.

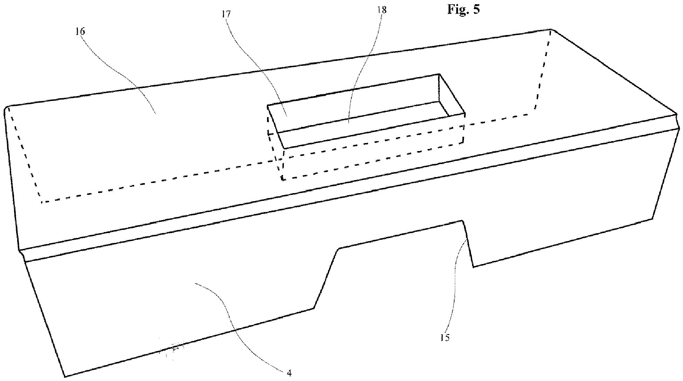

Fig. 5 shows a lid that is fitted onto the mousetrap that is the object of the invention.

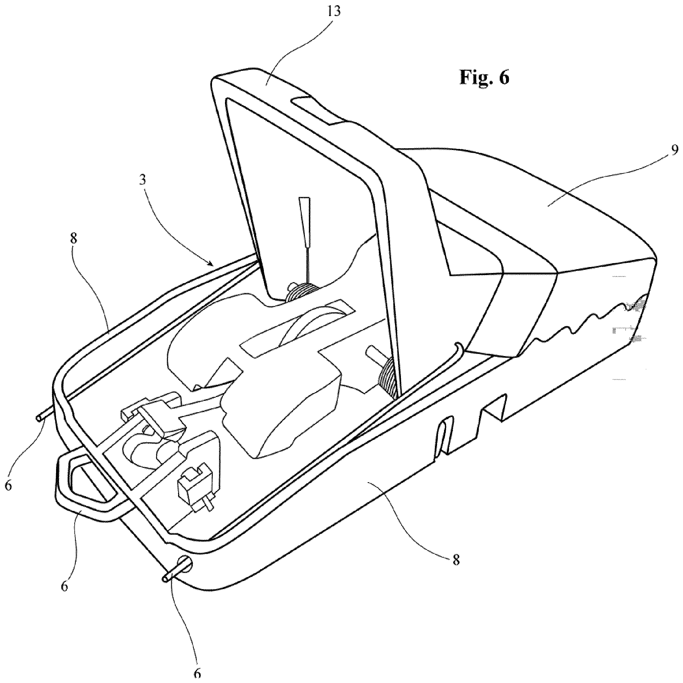

Fig. 6 shows in an isolated manner an example of mechanical trap adapted to be positioned on the top shelf of the trap that is the object of the invention.

### Detailed description of an example of a preferred embodiment

With reference to the drawings, it is evident that the mousetrap 1 is composed of a raised shelf 2 that supports one or more mechanical traps 3 placed above a basin 4 for containing the liquid substance. Mounted on the side of this support are ascending devices 5 which allow the mouse to easily climb from the trap support floor 1 to the raised platform 2.

Said ascending devices 5, which can be configured as linear ramps or steps 19, can be smooth, facilitating the cleaning of the surfaces and sanitising the traps, or else rough, thus promoting the preservation of the biological material of the mice that lay down a safe track upward to the raised shelf 2 also for the mice that come later.

Said mechanical traps 3, which can have the basic structure of commercial traps, have support devices 6 to work together with the upper part 7 of the trap 1 and to hold it in position on the raised shelf 2.

Said mechanical traps 3 on the shelf 2 can be a single one, a pair or a series of traps.

In their position, above the support or raised shelf 2, they are arranged in such a way that each one can be individually activated by a normal mouse that has gone up onto said support 2.

The supporting devices 6 which keep each mechanical trap 3 on the raised shelf 2 can be either fixed or movable, and their shifting or the movement of the entire trap 3 with respect to said support creates the conditions for the trap 3 not being supported with respect to the support 2 and for it to fall into the underlying container or tank or basin 4 filled with liquid.

In fact, the support of the mechanical trap 3 on the support 2 is sufficiently precarious to allow the mechanical trap 3 to pass through it or through the layout defined by it as soon as the retention devices 6 or the trap 3 moves following the activation of the triggering device for catching the mouse.

Said supporting devices 6, in the active actuation mode, i.e. as devices which are moved relative to the body 8 of the mechanical trap 3, are kinematically connected to the movable part 9 of the triggering device, and only at or after its said actuation are said "active" retention devices 6 offset with respect to the engagement in the retention seat 10 on the raised support.

In the event of passive retention devices 6, said devices are solidly connected with the body 8 of the mechanical trap 3, and engage with corresponding retention devices or seats 11 on the raised support.

Following the intervention of the triggering device 9, the mechanical trap 3 moves from its normal position, disconnecting said passive retention devices 6 with respect to the engagement in the raised support and causing the trap and the entrapped mouse to fall into the underlying tank 4 filled with liquid.

To render the operation even safer, faster and more reliable, alternatively or together with the aforementioned retention devices 6, the trap 1 is has a stop and counter element 12, overlying said mechanical traps 3, which can come into contact with the reset lever 13 of the mechanical trap.

Now this reset lever 13, usually up against and close to the trap body 8, with the gripping mouth 9 armed and raised, during the triggering for capturing and gripping the mouse, said reset lever 13 suddenly raises and moves upwards very quickly, detaching from the body 8.

By providing said stop element 12 above said reset lever 13, the result is that the reset lever 13 strikes violently during the activation of the mechanical trap 3, rising up against said stop 12 and consequently giving a strong downwards thrust to the entire mechanical trap 3.

This thrust ensures that even a large mouse with respect to the trap 3 itself can be pushed and made to fall into the basin 4 underneath. In fact, it could happen that a very large mouse, even if grasped and caught by the mechanical trap 3 in an unsuitable position or while it was already fleeing, could stay on the raised surface 2 and not end up in the underlying basin 4 filled with liquid.

With this effect due to the thrust of the lever reset arm 13 against the upper stop 12, the effect is certainly obtained even in cases of a difficult catch.

It should also be said that this trap 1 is advantageously has a cover 14 which protects the traps 3 from unwanted tampering, where said cover has an opening 15 for the free access of the mouse from the walk-over surface to the overhead surface 2.

Advantageously, said cover 14 lets you see if and how many traps 3 have been triggered, thereby facilitating maintenance operators. Eventually, said cover 14 may be made of a transparent material, facilitating the approach of the mouse which is wary of closed and dark places.

Advantageously, at the top 16 of the lid 14 there can be a small window 17 with an underlying ventilated container 18 for placing the bait, which is also easy to maintain when being emptied of the old and /or remaining residue of bait and filled with new fresh bait.

Advantageously, said ramps 5, which extend from the walk-over surface to the raised surface 2 above the basin 4, are ramps 5 that provide an easy pathway, like a simple deviation along a path along a wall.

In fact, said ramps or ascent devices 5, arranged in mirrored pairs, are present at the lower ends of the longitudinal side of the trap 1 and join at the top around the central part of the same side, thus forming a compulsory pathway, but as a simple variation in height always adjacent along the perimeter walls against which the trap rests.

Advantageously, lastly, said mousetrap's activation can be checked from a distance for each intervention of each single mechanical trap since they have data communication devices with a control station, activated by the interruption of the circuit continuity, kept closed by the presence of the mechanical traps in position on the raised surface.

## Claims

1. Mousetrap comprising a shelf (2) above an underlying basin (4) full of liquid, where on said shelf (2) there is at least one mechanical mousetrap (3) with a trigger mechanism, which can be activated mechanically with the approach and/or interaction with a normal mouse, retaining it after the activation of the trigger device, with there being position-maintenance devices (6, 10, 11), which keep said mechanical trap (3) in a position joined to the upper part (7) of the trap (1), and which are activated by the trigger device, disengaging said mechanical trap (3) from its position on the shelf (2) of said trap (1), and making the mechanical trap (3), and the mouse held by it, plunge into said liquid solution contained in the basin underneath (4).

2. Ethical mousetrap according to claim 1, **characterised by** the fact that said retention devices, or said position-maintaining devices (6) above said basin, intervene immediately after and as a result of the triggering of the gripper mouth (9) for holding the mouse to the trap (3) itself.

3. Ethical mousetrap according to claim 1, **characterised by** the fact that said intervention of the trap (3) with the operation of the gripping mouth (3) moved the position-maintenance devices (6) disengaging from the respective seats (10), removing the stable equilibrium from said mechanical trap (3).

4. Ethical mousetrap according to claim 1 **characterised by** the fact that said intervention of the trap (3) gripper mouth (9) moves the body (8) of the trap (3) and disengages the position-maintaining devices (6) disengaging them from their respective seats (11).

5. Ethical mousetrap according to claim 1 **characterised by** the fact that said mechanical trap (3) has a reset lever (13) opposite the gripper mouth (9) of the trap (3), and following the closing of the gripping mouth (9) the reset lever (13) is moved so as to slam violently up against a stop and contrast element (12) above said mechanical traps (3), and solidly joined to the mousetrap (1), pushing the mechanical trap (3) towards the underlying basin after the disengagement of the support devices (6) from the raised surface (2) of the mousetrap (1).

6. Ethical mousetrap according to claim 1 **characterised by** the fact that said trap (3) also has added mass to ensure the trap (3) sinks, together with the trapped rat, within said liquid solution, towards the bottom of the basin (4) full of liquid.

7. Ethical mousetrap according to claim 1 **characterised by** the fact that said trap (1) has one or more ramps or devices for ascending (5) on the side of the basin (4) to allow the mouse to easily reach one or more of the mechanical traps (3) above the basin itself.

8. Ethical mousetrap according to claim 1 **characterised by** the fact that said liquid solution that fills the basin (4) is a solution that prevents putrefaction and/or the release of bad odours from the dead mouse.

9. Ethical mousetrap according to claim 1 **characterised by** the fact that said trap (1) is modular, since the mechanical traps (3) can be set next to one another above the basin (4), but activating individually, and kept in place on the raised surface (2).

10. Ethical mousetrap according to claim 1 **characterised by** the fact that the activation of each single mechanical trap (3) can be checked directly or remotely, since the trap has a transparent cover.

11. Mousetrap according to claim 1 **characterised by** the fact that the activation of each single mechanical trap (3) can be checked directly or remotely, since the trap is equipped with data communication devices with a control station, activated by the interruption of the circuit continuity, which is kept closed by the presence of the mechanical traps in position on the raised surface (2).
